# EUROPÄISCHE PATENTSCHRIFT

(11) **EP 1 218 162 B1**
(45) Veröffentlichungstag und Bekanntmachung des Hinweises auf die Patenterteilung: **04.02.2004**
(21) Anmeldenummer: 00962150.9
(22) Anmeldetag: 02.10.2000
(51) Int. Cl.: B29C 45/50

(54) **VERFAHREN FÜR DAS SPRITZGIESSEN SOWIE EINSPRITZAGGREGAT**
METHOD FOR INJECTION MOULDING AND INJECTION UNIT
PROCEDE DE MOULAGE PAR INJECTION ET SYSTEME D'INJECTION

(30) Priorität: 08.10.1999 CH 183999
(43) Veröffentlichungstag der Anmeldung: 03.07.2002
(73) Patentinhaber: Netstal-Maschinen AG, CH-8752 Näfels (CH)
(72) Erfinder: WEINMANN, Robert, CH-8872 Weesen (CH); STILLHARD, Bruno, CH-9011 St. Gallen (CH); KEITEL, Ralph, F-68600 Algolsheim (FR)
(74) Vertreter: Ackermann, Ernst, Dipl.-Ing. HTL
(86) Internationale Anmeldenummer: PCT/CH2000/000536
(87) Internationale Veröffentlichungsnummer: WO 2001/026880

(56) Entgegenhaltungen:
- WO-A-97/34757
- DE-B- 1 091 744
- PATENT ABSTRACTS OF JAPAN vol. 016, no. 376 (M-1294), 12. August 1992 (1992-08-12) -& JP 04 122618 A (TDK CORP), 23. April 1992 (1992-04-23)
- PATENT ABSTRACTS OF JAPAN vol. 014, no. 536 (M-1052), 27. November 1990 (1990-11-27) & JP 02 227230 A (TOSHIBA MACH CO LTD), 10. September 1990 (1990-09-10)

## Beschreibung

### Technisches Gebiet

Die Erfindung betrifft ein Verfahren für das Spritzgiessen von Kunststoffteilen mit einer relativ und axial angetriebenen Einspritzschnecke, wobei der Antrieb für die Einspritzbewegung mit zwischengeschaltetem Kurbeltrieb und Hebelwerk erfolgt. Die Erfindung betrifft ferner ein Einspritzaggregat für Spritzgiessmaschinen.

### Stand der Technik

Eine Spritzgiessmaschine weist von den Hauptfunktionen her betrachtet drei Funktionsgruppen auf. Im Zentrum ist die Spritzform. Diese besteht im Prinzip aus zwei Formhälften. Auf der einen Seite der Spritzform ist der Antrieb für das automatische Öffnen und Schliessen der Formhälften angeordnet. Gegenüber befindet sich als dritte Gruppe das sogenannte Einspritzaggregat. Unter Einspritzaggregat wird hier die Gesamtheit von Einspritzzylinder mit Heizmantel, Einspritzschnecke sowie die dazu erforderlichen Antriebe mit den baulichen Verbindungsmitteln verstanden.

Vereinfachend bzw. verkürzt können die einzelnen Phasen der Einspritzung etwa wie folgt umschrieben werden. Durch einen Einfülltrichter wird Kunststoff in den Einspritzzylinder gespiesen. Das Rohmaterial wird durch die Schneckengänge der Einspritzschnecke erfasst und im Einspritzzylinder vorwärts bewegt. Durch die Drehbewegung der Einspritzschnecke wird der Kunststoff immer weiter zur Spitze gefördert und wird primär durch die Geometrie der Schnecke bzw. durch Scherwärme aufgeschmolzen und kommt als Schmelze in einem Sammelraum unmittelbar vor der Düse an. Als Nährungswerte gelten, dass die Schmelzwärme zu einem grossen Teil in mechanischer Arbeit zwischen Einspritzschnecke und Zylinderwandung und der Rest durch die Mantelheizung aufgebracht wird. Die Schmelze staut sich bei fortgesetzter Drehbewegung der Schnecke im Sammelraum und schiebt die Einspritzschnecke durch Volumenvergrösserung im Sammelraum in ihrer Achsrichtung rückwärts. Ist die für einen Schuss benötigte Menge an flüssigem Kunststoff im Sammelraum bereit, wird der Schneckendrehantrieb gestoppt. Die an der Spitze der Schnecke angebrachte Rückstromsperre wird durch die Vorwärtsbewegung geschlossen. Dadurch wird die Schnecke zu einem Kolben und übernimmt die Funktion eines Einspritzkolbens. Zum Einspritzen der Kunststoffmasse in die Form tritt eine Hydraulik in Aktion, welche in der Folge auch Kolbenantrieb genannt wird. Der Kolbenantrieb stösst die ganze Schnecke als reine Axialbewegung nach vorn. Die Einspritzschnecke, nunmehr als reiner Kolben wirkend, spritzt die Schmelze durch die Düse mit Drücken von bis zu 2000 bar in die Kavitäten der Form. Das Einspritzen wird in zwei Phasen verstanden. Die erste Phase ist das eigentliche Füllen. Der erforderliche Druck kann gegen das Ende der Füllphase zu den genannten 2000 bar ansteigen. Nach dem Füllen schliesst die Phase des Nachdruckes an, wobei der Enddruck der Füllphase etwa gehalten wird.

In der Praxis haben sich je nach Anwendungsgebiet zwei Verfahren etabliert. In der Verpackungsindustrie gilt als oberste Maxime eine grösstmögliche Stückzahl pro Zeiteinheit, um dadurch billigste Teile wie Joghurtbecher, Süsswarenverpackungen usw. herzustellen. Es werden besondere Verschlüsse verwendet, damit die Düse mitsamt dem Einspritzaggregat nach jedem Schuss sofort von der Form wegfahren und das Ausfliessen von Schmelze ins Freie trotzdem verhindert werden kann. Für die Sicherstellung der sehr hohen Qualitätsanforderungen bei technischen Anwendungen, etwa für die Herstellung von Zahnrädern mit höchster Präzision, wird die Düse an der Form belassen, so dass der erstarrende Kunststoff im Angusskanal ohne irgend eine Störung wie ein Düsenverschluss wirkt. Das Einspritzaggregat muss hier zwischen zwei Zyklen nicht verschoben werden. Theoretisch könnte der Sammelraum sehr lang ausgebildet werden. Die Länge der Schnecke bzw. die Länge der Schneckengänge ist entscheidend für die Aufbereitung der Schmelze. Die wirksame Länge wird aber um so kleiner, je länger der Sammelraum vor der Schneckenspitze ist. Als Grundregel gilt, dass der Sammelraum so gross ausgebildet wird, dass das grösste zu spritzende Teil mit einem einzigen Hub herstellbar ist und der beschriebene Spritzzyklus genutzt werden kann. Als Erfahrungswert gilt, dass der Verschiebeweg der Schnecke höchstens das Dreifache ihres Durchmessers betragen soll, damit die Schmelzqualität über den ganzen Dosiervorgang gewährleistet ist. Bei einer gegebenen Schneckengeometrie ist dadurch das grösste noch spritzbare Teil begrenzt. Bei allen kleineren Teilen wird entsprechend der Schneckenhub verkleinert.

Es ergeben sich zwei obligatorische Bewegungsfunktionen:
- rotativer Schneckenantrieb und die
- axiale Bewegung der Plastifizierschnecke.

Z.B. für den Einsatz für Verpackungsteile wird eine Zusatzbewegung für die Bewegung der Düse zu der Form und weg von der Form benützt. Diese dritte Bewegungsfunktion wird durch eine Verschiebung des ganzen Einspritzaggregates realisiert. Für die Definition werden der Förderrichtungssinn der Schnecke und entsprechend die Düse als vorne, die Gegenseite konkret die Lagerseite als hinten bezeichnet. Auf die drei Antriebe des Einspritzaggregates bezogen, ergeben sich beinahe zwingend folgende Anordnungen:
- der Aggregatantrieb für die Düsenzustellung (wenn nötig) unten;
- der axiale Antrieb der Plastifizierschnecke hinten;
- der rotative Antrieb der Plastifizierschnecke oben oder seitlich.

Diese Konzept hat sich über Jahrzehnte in tausenden von Variationen etabliert. Als Antriebsmittel war naheliegend, den Kolbenantrieb hydraulisch, den rotativen Antrieb elektromotorisch und den Aggregatantrieb hydraulisch oder pneumatisch auszuführen. Dabei werden die spezifischen Vorteile der verschiedenen Abtriebsformen ausgenutzt. Bei hydraulischen oder pneumatischen Zylindern wird eine Linearbewegung, und ohne Umformung die grösstmögliche lineare Verschiebekraft erzeugt. Bei elektromotorischen Antrieben wird dagegen eine rotative Kraft erzeugt und steht als solche mit entsprechender Getriebeuntersetzung angepasst auf den Durchmesser der Plastifizierung, direkt zur Verfügung.

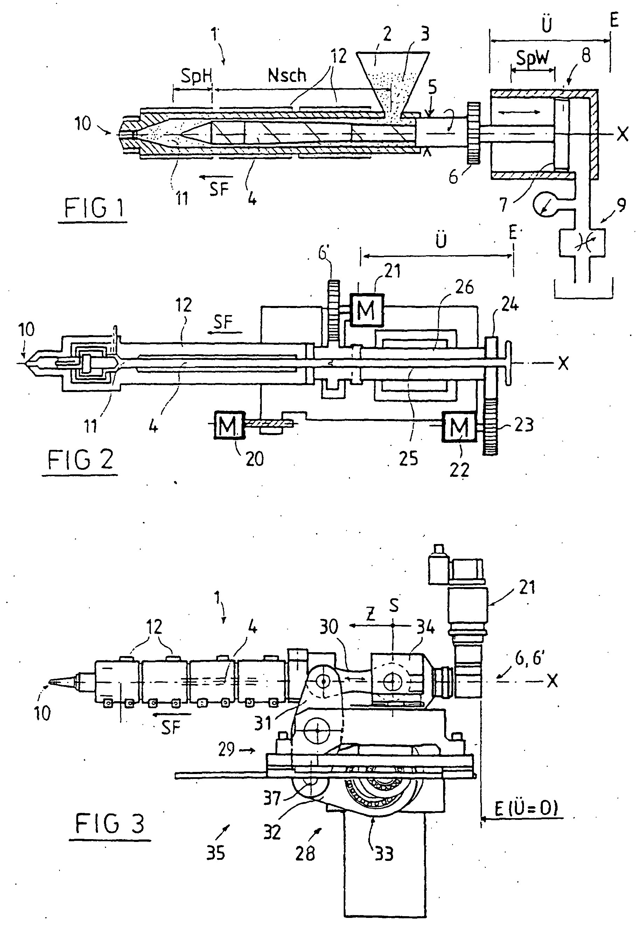

Die Figuren 1 und 2 zeigen zwei typische Lösungen des Standes der Technik, die Figur 1 eine hydraulische und die Figur 2 eine sogenannt elektrische Lösung. In der Figur 1 wird allerdings nur die Axialbewegung über einen hydraulischen Kolben betätigt. Schon seit längerer Zeit ist die Forderung einer kürzeren Maschine bekannt. Die beiden Beispiele entsprechen nicht dieser Forderung.

Ein anderer Weg wurde mit der EP 451 294 gegangen. Für die Einspritzbewegung der Schnecke wird ein reiner Kurbeltrieb mit einer Kurbel zwischen einer ortsfesten Platte sowie einer zu dieser hin- und von dieser fortbewegbaren Platte vorgeschlagen. die eine Kurbel ist vorgesehen zum Umsetzen einer Vorwärts- und einer Rückwärtsdrehung der Antriebswelle in eine Hin- und Herbewegung der Einspritzförderschnecke. Der Antrieb bzw. Übertrieb für die Axialbewegung der Einspritzschnecke wird in Bezug auf den Einsatz eines Kurbeltriebes direkt als Stosskraft zwischen der ortsfesten Platte und der Förderschnecke ausgenutzt. Daraus ergeben sich noch grössere Nachteile in Bezug auf die Forderung einer kurzen Maschine. Der Kurbeltrieb mitsamt der ortsfesten Platte ist nach hinten angebaut, und befindet sich noch hinter dem nicht dargestellten rotativen Antrieb für die Plastifizierschnecke. Eine solche Lösung ist nur bei Kleinstmaschinen sinnvoll. Ein weiterer Nachteil ergibt sich aus der direkten Zwischenschaltung eines Kurbeltriebes zwischen Schnecke und ortsfester Platte. Der Krafteingriff der einen Kurbel auf die Förderschnecke erfolgt, in einem beachtlich grossen Winkel zu der Achse der Einspritzschnecke. Zur Vermeidung entsprechender Seitenkräfte auf die untere Mantelfläche des Einspritzzylinders wird als Variante vorgeschlagen, die Einspritzschnecke über eine dazwischen angeordnete, längsgeführte zusätzliche Druckplatte zu bewegen. Dadurch baut diese Lösung aber noch länger. Es trifft zwar zu, dass sie fast nicht mehr zu unterbieten ist allein in Bezug auf die Herstellkosten des vorgeschlagenen Kurbelübertriebes betrachtet. Der billigere Preis gemäss der Lehre der EP 451 294 muss jedoch mit den zwei bedeutenden Nachteilen der Maschinenverlängerung sowie der Notwendigkeit der Kompensation von Seitenkräften bezahlt werden. Gemäss der Lehre der EP451 294 wird der Drehwinkelbereich der Antriebswelle bzw. der Arbeitsbereich der Kurbel beim Vorwärts- und Rückwärtsdrehen durch entsprechende Auslegung der Steuereinrichtung beschränkt. Der Arbeitsbereich der Kurbel darf obere und untere Totpunkte der Kurbel und auch Umgebungsbereiche der oberen und unteren Totpunkte entsprechend ein Bereich von etwa 30° nicht enthalten.

Ferner sind Kniehebelmechanismen in Einspritzaggregaten fin Spritzgießmaschinen aus der WO-A-9 734 757 der JP-A-2 227 230, der JP-A-4 122 618 und der DE-A-1 091 744 bekannt.

Die WO-A-9 734 757 schlägt einen Kniehebelmechanismus vor, der direkt an die Plastifizierschnecke angelenkt ist, und dabei eine Kraftübertragung mit jeweils optimalem Kräfteverhältnis ermöglicht. Das bauliche Konzept sieht einen Zwischenhebel vor, welcher über eine Kurbel sowie eine Lasche angetrieben wird. Der Zwischenhebel selbst ist als zweiarmiger Hebel ausgebildet, welcher in der Mitte über ein erwähntes Gelenk die Plastifizierschnecke bewegt. Der Vorteil dieser Lösung liegt darin, dass die Kraftübertragung von hinten direkt in die Achse der Förderschnecke durch Drucken bzw. Stossen erfolgt und grössere Seitenkräfte im Vergleich zu der EP-A-0 451 294 vermeidet. Nachteilig ist die Platzierung der An- und Übertriebe. Die JP-A-4 122 618, die JP-A-2 227 230 und die DE-A-10 91 744 haben alle ein gemeinsames Konzept. Der Antriebshebel wird unten von einer Kurbel angetrieben, ist etwa in der Mitte gelagert und greift mit dem oberen Hebelende direkt in Achrichtung an der Förderschnecke als eine Stoss- oder Druckbewegung an. Allen drei Lösungsvorschlägen haftet der Nachteil der grösseren Baulänge an.

### Darstellung der Erfindung

Der Erfindung lag nun die Aufgabe zugrunde, ein Optimum zu suchen, im Hinblick auf die steuer- und regeltechnische Kontrolle des ganzen Spritzzyklus, also die verfahrenstechnische Seite, und insbesondere auch auf Grund der baulichen und kräftemässigen Forderungen:
- einer kurzen, nach Möglichkeit elektrisch antreibbaren Maschine
- der Vermeidung von Seitenkräften auf die Einspritzschnecke
- sowie der bestmöglichen der Platzierung der An- und Übertriebstechnik.

Diese Aufgabe wird erfindungsgemäß durch ein Verfahren gemäß Anspruch 1 und ein Einspritzaggregat gemäß Anspruch 3 gelöst.

Das erfindungsgemäße Verfahren gestattet eine ganze Anzahl weiterer vorteilhafter Ausgestaltungen, insbesondere eine optimale Nutzung aller wesentlichen Vorteile eines Kurbeltriebes. Besonders bevorzugt ist das Kurbeltrieb für das Anfahren der Extremlagen zwischen den beiden Totpunkten bewegbar. In sehr vielen Anwendungen ist es vorteilhaft, wenn der Kurbeltrieb sich für jeden Spritzzyklus unabhängig der Spritzteilgrösse dem vorderen Totpunkt nähert. Es wird ferner vorgeschlagen, den Umschaltpunkt von Füllen auf Nachdruck in den Bereich von 20 bis 40°, vorzugsweise in den Bereich von etwa 30° vor der vorderen Totpunktlage des Kurbeltriebes festzulegen. Es hat sich gezeigt, dass. im vorderen Bereich, in Totpunktnähe der Motor nahezu kein Drehmoment bzw. nahezu keine Leistung mehr aufbringen muss. Der Nachdruckbereich besonders für eine optimale Beherrschung eines Massepolsters wird damit viel komfortabler und mit Mikrobewegungen gegebenenfalls mit Unterstützung von diversen Kennlinien. Gemäss einer weiteren vorteilhaften Ausgestaltung des Verfahrens kann die Axialbewegung vom vorderen Totpunkt der Kurbelbewegung her festgelegt werden. Der effektive Hubweg richtet sich nach der zu spritzenden Teilgrösse. Im vorderen Bereich werden etwa 30° für die Nachdruckphase, und im hinteren Bereich können bis zu 30° für eine Druckentlastung ausgenützt werden. Im hinteren Bereich ergibt die Zusatzbewegung in dem Bereich des Schneckenrückzuges nach der Plastifizierung eine Druckentlastung für die Masse. Für den Füllvorgang verbleibt ein Winkelbereich von 100 bis 140° als maximale Wegstrecke für das grösste zu spritzende Teil. Dabei lassen sich alle Vorteile eines Kurbeltriebes maximal nutzen.

Der gängigen, nunmehr jahrzehntelangen Praxis lag als Modell das direkte Drücken oder Stossen der Förderschnecke von hinten in Axrichtung, für das Aufbringen der extrem hohen Spritzkräfte beim Einspritzen und Nachdrücken zu Grunde. Das Hebelwerk gemäss der erfindungsgemäßen Lösung greift an der hinteren Lagerstelle der Einspritzschnecke an und erstreckt sich bevorzugt in Richtung der Schneckenförderung, also nach vorne. Die erfindungsgemäße Lösung hat den sofort ersichtlichen Nachteil, dass für das Hebelwerk mehrere Einzelteile benötigt werden. Demgegenüber stehen jedoch die viel gewichtigeren Vorteile, nämlich:
- eine echte Verkürzung der ganzen Maschine,
- eine ideale Kraftübertragung, ganz besonders in Kombination der Aufbringung einer Zugkraft beim Einsatz eines Exzenter- oder Kurbeltriebes über ein Hebelpaar;
- eine kompakte Baugruppe, welche nunmehr das Einspritzaggregat bildet,
- eine optimale Kräfteführung wie in der Folge noch dargelegt wird,
- ferner ideale Voraussetzungen um z.B. die sehr vorteilhaften Servoantriebe wenigstens für Axial- und Radialantrieb der Einspritzschnecke zu verwenden.

Es wird für die besonders vorteilhaften Ausgestaltungen der Vorrichtung auf die abhängigen Ansprüche Bezug genommen.

Das Doppelhebelwerk weist eine Zughebellage auf, die sich in Richtung der Schneckenförderung erstreckt, im Vorderteil an einem aufrechten Schwenkarm angelenkt und über diesen mit einem elektromechanischen Antrieb verbunden ist. Besonders bevorzugt weist der Antrieb einen Kurbel- oder Exzenterübertrieb auf, der zwischen Zughebelwerk sowie einem steuer- bzw. regelbaren Antriebsmotor angeordnet ist. Der Antrieb kann als Servomotor ausgebildet werden. Die ganze Mechanik wird so ausgelegt, dass die maximale Auslenkbewegung des Kurbel- bzw. Exzenterübertriebes dem maximalen Hub der Einspritzförderschnecke etwa entspricht. Die Erfindung erlaubt eine optimale Platzierung aller mechanischen Bauteile, vor allem auch in einem bisher weniger genutzten Raum innerhalb des Maschinenständers. Das Einfügen eines Hebelwerkes zwischen Einspritzschnecke und Kurbel- bzw. Exzenterantrieb gestattet alle gleichsam klassischen Vorteile eines Kurbelantriebes ohne dessen Nachteile zu nutzen. Vorteilhaft ist ein idealer Kraft-Wegverlauf für die Einspritzphase. Mögliche Seitenkräfte auf die Einspritzschnecke sind durch die parallele Krafteinleitung ausgeschaltet. Erfindungsgemäß ergibt des Hebelpaar einen idealen, symmetrischen Krafteingriff, besonders wenn das Hebelpaar zusammen mit der Axe der Einspritzschnecke in einer gemeinsamen Ebene liegt. Die Funktion der Einspritzschnecke wird auf keine Weise beeinträchtigt, da das Hebelpaar seitlich, mit einer Distanz bzw. mit Abstand und parallel zu dem Spritzzylinder geführt wird. Vorteilhafterweise bilden die Schwenkarme mit den Zughebeln etwa einen 90° Winkel, so dass die ganze Schwenkbewegung der Gelenkverbindung angenähert in der genannten gemeinsamen Ebene liegt. Die Schwenkarme sind direkt an einer Basisplatte des Aggregates schwenkbar abgestützt, wobei sie an seinem oberen Armteil an einen Seitenhebel und an seinem unteren Armteil mit dem Antrieb gelenkig verbunden ist. Der Schwenkarm ist an der Basisplatte schwenkbar abgestützt, welche auch den Spritzzylindern fest verbunden trägt. Damit können die enormen Kräfte für den Einspritzdruck auf dem kürzesten Weg innerhalb des Aggregates geschlossen werden. Das Schliessen der Kräfte auf dem kürzesten Weg erlaubt in aller Regel eine Leichtbauweise, womit die weiter oben erwähnte Benötigung von mehr Einzelteilen kompensiert wird. Bevorzugt wird des weiteren vorgeschlagen, dass der Antrieb für die Axialbewegung als Servomotor mit Getriebe ausgebildet und, fest im Aggregatunterteil angeordnet wird.

Gemäss einer ganz besonders vorteilhaften Ausgestaltung wird das Einspritzaggregat mit verfahrbarem Untersatz als komplette Baueinheit integral mit dem elektromechanischen Antrieb für die Förderschnecke schlittenartig hin- und herbewegbar ausgestaltet. Die Förderschnecke wird für den Aufbau des Spritzdruckes bevorzugt über ihre hinteren Lagerstelle mit einem Hebelpaar auf der Basisplatte in der Art eines Zugschlittens in Förderrichtung gezogen. Dieses Gestaltungskonzept erlaubt die ganze Antriebseinheit für das Zughebelpaar unter der Basisplatte einzubauen und fest mit dieser zu verbinden. Im oberen Teil der Zugmittel bleibt der innere Raum frei für den Spritzzylinder. Bei der Aggregatverschiebung für die Düsenzu- und -wegfahrbewegung wird das ganze Einspritzaggregat bewegt. Für die motorischen Antriebsmittel ist eine 'durchgehende, für beide Hebel des Hebelpaares gemeinsame Kurbelantriebswelle vorgesehen. Dies erlaubt einen symmetrischen Antrieb und Übertrieb für beide Seiten der Einspritzschnecke. Daraus ergibt sich ein weiterer sehr wichtiger Aspekt, nämlich die Symmetrie der Kräfte einerseits, besonders aber die darauf aufbauende Symmetrie der wichtigsten raumbeanspruchenden Teile der ganzen Spritzgiessmaschine. In Weiterführung des aufgezeigten neuen Lösungsweges kann das Einspritzaggregat als Kompaktbaugruppe hergestellt werden. Ein Antriebsgehäuse wird direkt unterhalb der Basisplatte platziert. Das neue Konzept gestattet jedoch eine grosse Freiheit für die Wahl und die genaue Anordnung der motorischen Antriebsmittel. Die neue Lösung kann bei den verschiedenartigsten Spritzgiessmaschinen, z.B. für CD spezialisierte Maschinen eingesetzt werden. Das neue Konzept ist ferner ideal für eine sehr wirtschaftliche Fabrikation, nämlich der Baugruppenherstellung. Die entsprechenden Vorteile kommen besonders dann zum Tragen, wenn die Baugruppe beinahe Produktionsbereit alle wichtigen Komponenten enthält, welche für die Funktion des Einspritzaggregates notwendig sind. Auf diese Weise lassen sich Montagekosten sparen. Es ist möglich, einen Teil der Vorortelektronik bzw. Steuerung z.B. die Leistungselektronik direkt unter dem Einspritzaggregat z.B. im Unterteil anzuordnen.

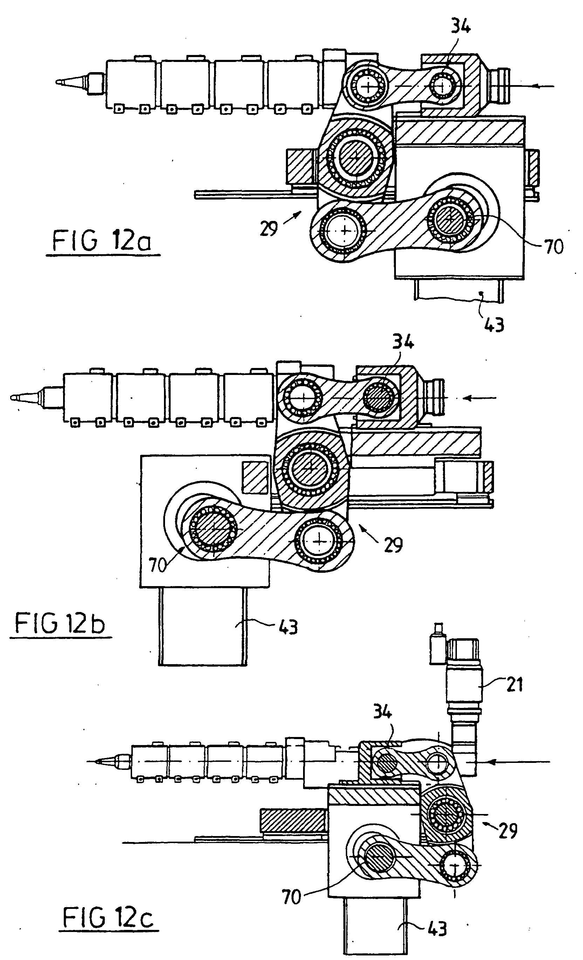

Die Erfindung betrifft ferner die Verwendung des Einspritzaggregates nach Anspruch 3, mit einem Doppelhebelpaar, das mit der Lagerstelle einen Stossanker bildet (Figur 12c).

### Kurze Beschreibung der Erfindung

Die Erfindung wird nun an Hand von einigen Ausführungsbeispielen mit weiteren Einzelheiten erläutert. Es zeigen:
- die Figur 1: den klassischen Typus der Einspritzseite einer Spritzgiessmaschine mit hydraulischem Antrieb für die Einspritzbewegung;
- die Figur 2: eine Lösung des Standes der Technik mit drei elektromotorischen Antrieben (M);
- die Figur 3: ein Beispiel für die neue, erfindungsgemässe Lösung;
- die Figur 4: die Hauptelemente für den An- und Übertrieb für die Einspritzbewegung;
- die Figur 5: ein Diagramm mit den wichtigsten Parametern während einer Einspritzphase;
- die Figuren 6a - 6c: drei verschiedene Stellungen von Kurbeltrieb und Hebelwerk;
- die Figur 7a: die Figur 3 in grösserem Massstab;
- die Figur 7b: die Figur 4a eine perspektivische Darstellung, mit paarweisen Zughebeln;
- die Figur 8a: eine Ansicht mit Teilausschnitt für die Bewegung der Bauteile zueinander;
- die Figur 8b: einen Schnitt IIXb - IIXb der Figur 8c;
- die Figur 8c: eine Frontansicht des Einspritzaggregates gemäss Pfeil IIXc der Figur 8a;
- die Figur 9a: ein Schnitt der Antriebsseite für die Einspritzbewegung;
- die Figur 9b: eine Ansicht von oben gemäss Pfeil IXb der Figur 9a;
- die Figur 10: ein Einspritzaggregat mit Steuer/Regelkonzept;
- die Figuren 11a und 11b: ein Beispiel für beide Schneckenbewegungen (Vorlauf und Rücklauf) von Totpunkt zu Totpunkt;
- die Figuren 12a - 12c: verschiedene Dispositionen für das Hebelwerk.

### Wege und Ausführung der Erfindung

Die Figur 1 zeigt schematisch gleichsam ein Schulbeispiel des Standes der Technik für die Spritzseite einer Spritzgiessmaschine. Das Herzstück ist ein Einspritzzylinder 1 in den über einen Einfülltrichter 2 Rohmaterial 3, meistens in Granulatform gespiesen wird. In dem Einspritzzylinder 1 befindet sich eine Förderschnecke bzw. Einspritzschnecke 4, welche auf der rechten Seite an einer Lagerstelle 5 gelagert ist. Die rotative Bewegung der Einspritzschnecke wird über ein Zahnrad 6, und die Einspritzbewegung als Kolbenantrieb über einen Hydraulikkolben 7 erzeugt, welcher in einem Hydraulikzylinder 8 um einen bestimmten Axialverschiebeweg SpW bewegbar ist. Das Mass SpW richtet sich nach der gewünschten Schussmenge für das Spritzen eines Teiles bzw. der entsprechenden Menge bei Mehrfachformen. Die für die Hydraulik erforderliche "Peripherie" ist mit Bezugszeichen 9 nur angedeutet. Ganz links endet der Einspritzzylinder 1 mit einer Düse 10, über welche die geschmolzene Kunststoffmasse 11 in die Kavitäten einer Form gespritzt wird. Der Einspritzzylinder 1 ist umgeben mit Heizpaketen 12. Mit der Massangabe SpH ist der maximal mögliche Spritzhub eingezeichnet. Die Technologie des Spritzvorganges wird als bekannt vorausgesetzt. Interessant ist noch die Massangabe Nsch, mit welcher die nutzbare Länge der Einspritzschnecke bezeichnet ist. Rechts im Bild ist mit Ü die Überlänge der Maschine angegeben. Damit kommt zum Ausdruck, dass die hydraulische Antriebsseite eine beachtlich grosse Länge einnimmt, um welche die Maschine durch die nach hinten vorstehende Hydraulik verlängert wird.

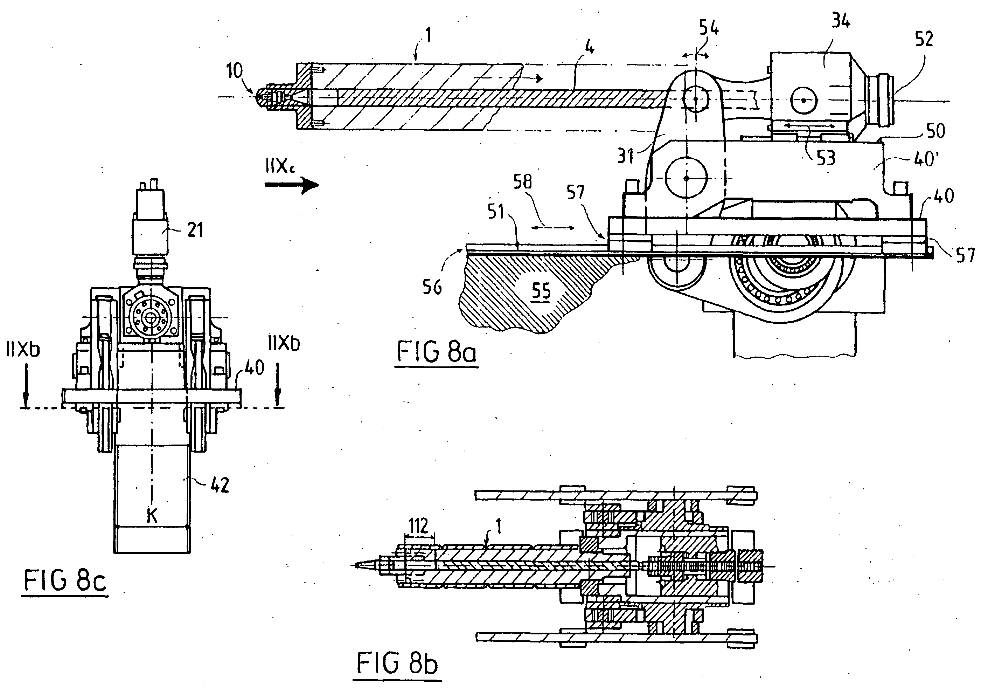

Die Figur 2 zeigt ein weiteres Beispiel des Standes der Technik. Es handelt sich um einen Ausschnitt (Figur 8) der japanischen Patentschrift 62-248615. Interessant sind bei der ebenfalls schematisch dargestellten Lösung die elektromotorischen Antriebe. Mit einem Motor 20 wird das ganze Einspritzaggregat für das Zu- und Wegführen der Düse 10 an die Spritzform bewegt. Der Motor 21 treibt die Zahnräder 6' für die rotative Bewegung der Förderschnecke, und der Motor 22 die Zahnräder 23 sowie 24 an, für die Kolbenbewegung der Einspritzschnecke 4. Die Bewegungsübertragung kann z.B. über eine Welle 25 sowie Kugelspindel 26 erfolgen. Auffallend an dem zweiten Beispiel ist eine gleicherweise beachtliche Überlänge Ü, die allein durch die elektromotorischen Antriebs- und Übertriebsmittel für die Axialbewegung der Förderschnecke 4 benötigt wird. Gestützt auf nur auf die zwei Beispiele gemäss Figur 1 und Figur 2 müsste gefolgert werden, dass ein elektromotorischer Übertrieb in Bezug auf die Maschinenlänge nichts bringt.

Die Figur 3 zeigt nun aber mit einem neuen, erfindungsgemässen Lösungsbeispiel, dass mit dem hinteren Ende E die Maschinenlänge begrenzbar ist. Mit Ü = 0 wird angezeigt, dass mit der neuen Lösung durch die An- und Übertriebe keine Zusatzlänge erforderlich ist. Der Grund liegt darin, dass gemäss neuer Lösung ein Doppelhebelwerk bzw. Zughebelwerk 29 der An- und Übertriebsmittel sich gegen das Maschineninnere erstreckt. Die Einspritzschnecke 4 wird für die Einspritzphase mit einer von aussen wirkenden Zugkraft Z nach vorne bewegt. Die beiden Hauptelemente für das Doppelhebelwerk sind Zughebel 30 und Schwenkarm 31. Der Schwenkarm 31 wird unten von einem Pleuel 32, einem Kurbeltrieb 28 mit Exzenter 33 betätigt. Der Exzenter 33 wird von einem Servomotor mit Getriebe angetrieben. Der Zughebel 30 greift an der hinteren Lagerstelle bzw. am Lagergehäuse 34 an und erstreckt sich in Richtung SF der Schneckenförderung, also nach vorne, so dass die Zugwirkung entsteht.

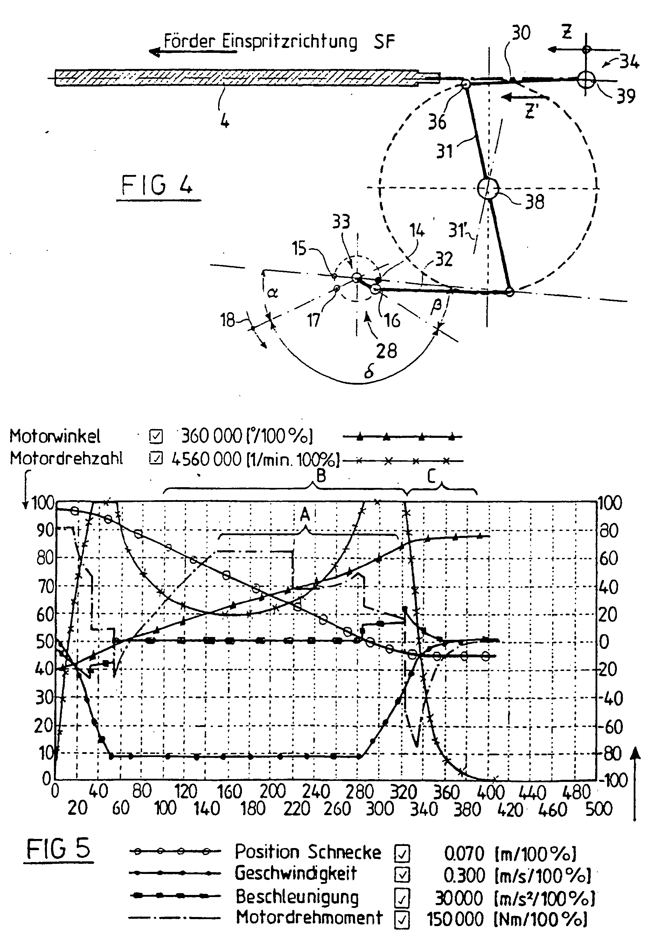

Die Figur 4 zeigt ein leicht modifiziertes Beispiel zu der Figur 3, jedoch reduziert auf ein Strichmodell. In der Figur 3 ist der Zughebel 30 sowie der Pleuel 37 auf die gleiche Seite, nach rechts im Bild gerichtet. In der Figur 4 ist dagegen der Pleuel 32 in die Gegenrichtung angeordnet. Daraus ergibt sich, dass eine Zugkraft Z', welche über den Zughebel 30 aufgebracht wird, unten durch eine Stosskraft auf den Pleuel 32 verursacht wird. Dies macht ausser dem anderen Drehsinn für den Kurbelantrieb keinen Unterschied für die Art der Krafteinwirkung auf die Lagerstelle 34. Bei der Figur 4 ist schematisch ein Kurbelantrieb anstelle des klassischen Exzeterantriebes wie in Figur 3 dargestellt. Eine wichtige Aussage der Figur 4 ergibt sich aus den drei eingezeichneten Stellungen nämlich eine vordere Totpunktlage 14, eine hintere Totpunktlage 15, ein vorderer Umschaltpunkt 16 von Füllen auf Nachdruck, sowie ein hinterer Umschaltpunkt 17 für eine Druckentlastung. Dargestellt sind die Extremlagen zwischen den beiden Totpunkten, welche nur bei dem grösst möglichen Spritzteil angefahren werden müssen. Bei kleiner werdendem Hub (Sp.H) für kleinere Teile verschiebt sich der hintere Umschaltpunkt 17 gezwungenermassen nach vorne (Pfeil 18). Der ganze Arbeitsbereich ist dann weniger als 180°. Es ergeben sich drei Winkelbereiche α, β und δ. Dabei werden α und β in der Grössenordnung von etwa 20 bis 40°, je nach Bauteilgrösse gewählt. Der Winkel δ ist dagegen durch die Grösse des zu spritzenden Bauteiles und der entsprechenden Auslegung des ganzen Aggregates festgelegt. Eine zusätzliche Variable ergibt sich aus dem Schneckendurchmesser.

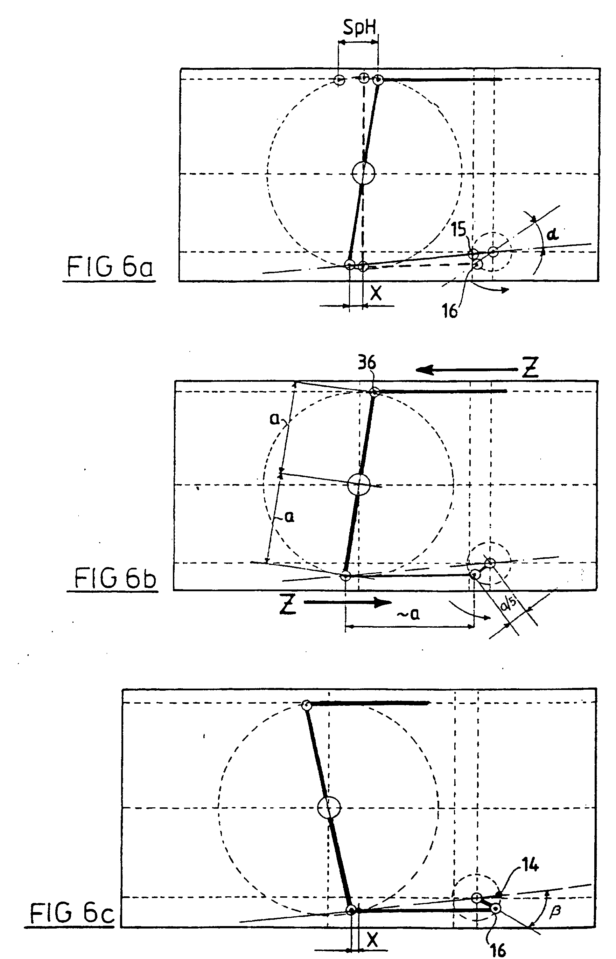

Die Figur 5 zeigt im Simulationsbild mit bestimmten, vorgewählten Verfahrensgrössen, und zeigt die sich ergebenden Parameter für eine Einspritzphase mit Anfahren der vorderen Totpunktnähe. Hervorgehoben soll nur die strichpunktierte Linie, welche das Motordrehmoment ferner die gekreuzte Linie, welche die Motordrehzahl wiedergibt. Der Bereich B zeigt den Bereich des hohen Motordrehmomentes. A bezeichnet die zunehmende Motordrehzahl mit einer eigentlichen Spitze am Ende von A. Dies bedeutet, dass der Motor am Ende des Bereiches A bzw. B auf seine Spitzenleistung gefordert ist. In dem Übergang von B nach C brechen beide, sowohl Drehmoment wie Drehzahl zusammen. Dies entspricht dem vorderen Umschaltpunkt 16 der Figur 4. Dies ermöglicht, dass der Antriebsmotor in einer klar begrenzten Zeitspanne von weniger als 100 ms überlastet werden kann, und gestattet die Wahl eines kleinere Antriebsmotores.

Die Figuren 6a bis 6c zeigen drei verschiedene Stellungen von Hebelwerk und Kurbeltrieb. Die Disposition entspricht etwa der Figur 3 mit beidseitiger Zugwirkung auf den Schwenkarm. Die Figur 6a gibt eine hintere Totpunktlage 15 sowie einen hinteren Umschaltpunkt 16, mit eingeschlossenem Winkel α wieder. Der maximale Spritzhub ist mit SpH eingezeichnet. Die Figur 6b zeigt einen weiteren interessanten Aspekt, nämlich die Hebellängen a. Ersichtlich kann durch Wahl der entsprechenden Längen z.B. α/5 beim Exzenter eine zusätzlicher Vorteil erreicht werden. Der grösstmögliche Kurbelweg des relativ kleinen Exzenters hat eine relativ kleine Bogenbewegung der Lagerstelle 36, und damit eine relativ kleine Auslenkung aus einer Parallelebene HE zur Folge. Die Figur 6c zeigt die entgegengesetzte Extremlage nämlich den vorderen Umschaltpunkt 16 sowie den vorderen Totpunkt 14 mit Winkel β. Mit dem Mass X wird angedeutet, dass der Hubweg in dem Bereich der Winkel α und β sehr klein ist, und gegen Null geht, je näher der Exzenter an die Totpunktlage kommt.

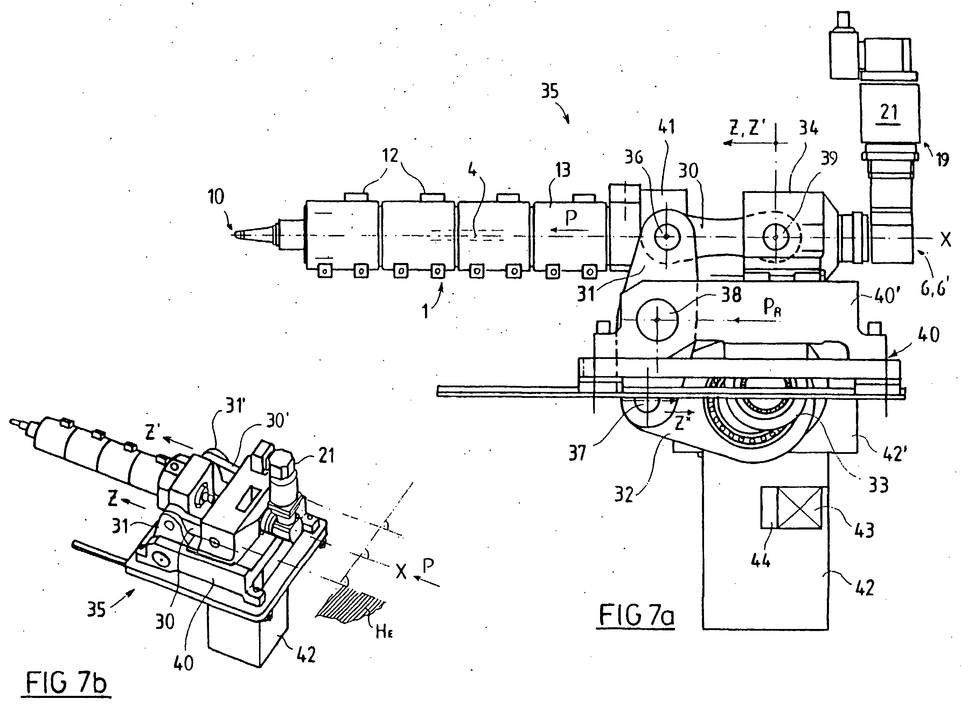

Die Figur 7a ist körperlich und nicht wie die Figuren 1 und 2 nur rein schematisch dargestellt. Die schematische Darstellung gibt zwar einen guten Eindruck der Zugehörigkeit der einzelnen Komponenten z.B. aller Antriebe. Wo die Maschinenteile tatsächlich montiert sind, ist der schematischen Darstellung nicht entnehmbar. Die Figur 7a zeigt demgegenüber deutlich, dass die neue Lösung eine kompakte Baugruppe für ein ganzes Einspritzaggregat 35 ergibt. Dieser Aspekt wird noch stärker untermauert mit einer perspektiven Darstellung gemäss Figur 7b. Die Figur 7b zeigt zusätzlich eine bevorzugte Ausgestaltung, bei der die Zughebel als Hebelpaar 30, 30', und entsprechend die Schwenkarme 31, 31' doppelt ausgebildet sind. Die Zugkräfte Z, Z' werden nicht nur halbiert, sondern wirken in Bezug auf die Axe X symmetrisch. In der Figur 7b sind ferner die Wirklinien entsprechend der Zugkräfte Z, Z' resp. der entsprechende Axialdruck P auf die Spritzmasse eingezeichnet. Alle drei liegen in einer gemeinsamen Ebene HE. Die Figur 7a zeigt die Figur 3 in grösserem Massstab. Das ganze Hebelwerk 29 stellt ein Mehrfachgelenk dar. Ein Gelenk 36 hier als Verbindung eines Zughebels 30 sowie Schwenkarm 31, und ein Gelenk 37 als Verbindung zwischen Schwenkarm 31 und Pleuel 32 sind in der Bildebene betrachtet frei bzw. ergeben eine Auslenkung in einer Kreisbewegung. Der Schwenkarm 31 weist eine reine Drehachse 38 auf, welche an einer Basisplatte 40 des Einspritzaggregates 35 gelagert ist. Die Hebel 30 sind über Lagerzapfen 39 mit den Lagerstellen 34 verbunden. Die Zugkräfte Z, Z' werden durch die Antriebsmittel über den Pleuel 32 als Z^{X} aufgebracht und ergeben eine Reaktionskraft P_{R}, welche in etwa der Druckkraft P auf die Förderschnecke 4 entspricht. Der Schneckenzylinder 13 seinerseits ist mit einem hinteren Gehäuseteil 41 fest verschraubt mit der Basisplatte 40 bzw. den Aufsatz 40' der Basisplatte 40, so dass sich der Hauptteil der Druckkraft P über den Einspritzzylinder 1 mit der Reaktionskraft PR wieder ausgleicht. Eine Differenz verbleibt allerdings, und zwar die Kraft, die sich aus dem freien Durchströmquerschnitt der Düse 10 ergibt. Diese kann, wie später noch erklärt wird, über die Verstellmittel des ganzen Aggregates kompensiert werden. Die Basisplatte 40 ist nach unten mit einem Antriebskasten 42, 42' erweitert. Ein Antriebsmotor z.B. ein Servomotor 43 kann mit Getriebe 44 mit angeflanscht werden.

Aus der Figur 8a ist baulich der Zusammenhang zwischen der Einspritzbewegung der Einspritzschnecke 4 relativ zur Basisplatte 40 sowie der Aggregatverschiebung relativ zu dem Maschinenbett 55 zu erkennen. In der Figur 8a sind ferner die beiden wichtigsten parallelen Bewegungsebenen 50 und 51 mit zwei dickeren, ausgezogenen Linien markiert. Die Einspritzschnecke 4 ist über das Lagergehäuse 34 über einen Gleitschuh- und Führungsschiene 52 horizontal gegenüber der Basisplatte 40 hin- und herverstellbar, wie mit Pfeil 53 angegeben ist. Diese Bewegung wird wie schon beschrieben durch eine Verschwenkbewegung des Schwenkarmes 31 gemäss Pfeil 54 erzielt. Mit dem Bezugszeichen 55 ist das ortsfeste Maschinenbett bezeichnet, auf dem eine Führungsschiene 56 fixiert ist. Die Basisplatte 40 weist auf jeder Seite zwei Gleitschuhe 57 auf, welche auf den Führungsschienen 56 horizontal, verschiebbar sind. Da die Verschiebekräfte, Pfeil 58, für das ganze Einspritzaggregat 35 bedeutend kleiner sind, gegenüber den maximalen Druckkräften für die Einspritzschnecke, besteht für die Wahl der Antriebsmittel für die Aggregatverschiebung eine grössere Wahlmöglichkeit. Es kann z.B. ein elektromotorischer Antriebsmotor oder sogar ein pneumatischer Zylinder eingesetzt werden. Die Figur 8b ist ein Schnitt IIXb - IIXb der Figur 8c und ist im mittleren Teil über die Breite k durch die Einspritzschnecke gelegt.

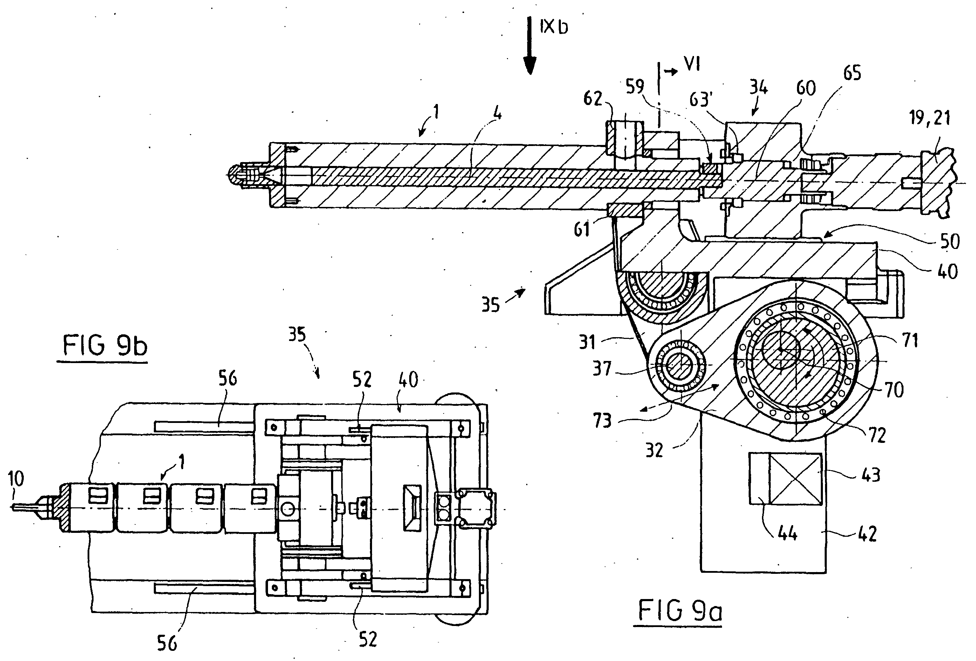

Die Figur 9a zeigt die Ausgestaltung der Schneckenkupplung 59 und der dahinter angeordneten Lagerung 65 mit Drucklager, um die Rotationsbewegung sowie Axialbewegungen über die Servoantriebe in jeder Position der Plastifizierschnecke einleiten können. Die Plasifizierschnecke 4 ist mit einem Wellenzwischenstück 60 schnelllösbar gekuppelt. Der Spritzzylinder ist über einen Mantelteil 61 fest mit der Basisplatte 40 verbunden und wird bei der Aggregatverschiebung für die Düsenverstellung mitbewegt. Das Lagergehäuse 34 ist über verschiedene Lager 63, 65 kraftschlüssig mit der Plastifizierschnecke verbunden, derart, dass die rotierende Bewegung der Plastifizierschnecke 4 unabhängig der Verschiebeposition der Plastifizierschnecke 4 und Lagergehäuse 34 gewährleistet ist. Antriebsmotor 21 und Getriebe 19 stützen sich auf das Lagergehäuse 34 derart ab, dass die rotierende Antriebsbewegung auf das Wellenzwischenstück 60 bzw. die Einspritzschnecke übertragen wird. Das in der Figur 9a gezeigte Beispiel zeigt eine sehr vorteilhafte Kraftübertragung über eine Exzenterwelle 70, welche z.B. als durchgehende Welle von einem Servomotor 43 über ein zwischengeschaltetes Getriebe angetrieben wird. Die Exzenterwelle 70 überträgt mit dem Exzenterteil 71 und Lager 72 auf den Pleuel 32 die erforderliche Kraft, entsprechend dem ganzen vom Spritzzyklus über eine Steuerung geforderten Ablauf. Aus der Exzenterbewegung entsteht für den Schwenkarm 31 eine Schwenkbewegung gemäss Pfeil 73, welche spiegelbildlich eine Gegenbewegung zu Bewegung Pfeil 54 in Figur 8a ist. Die Figur 9b zeigt die schlittenartige Verschiebbarkeit der Plastifizierschnecke auf Schienen 52 sowie des ganzen Einspritzaggregates 35 auf Führungsschienen 56 in einer Draufsicht auf das ganze Einspritzaggregat. Die Führungsschienen 56 sind auf dem Maschinenbett 55 fest verankert.

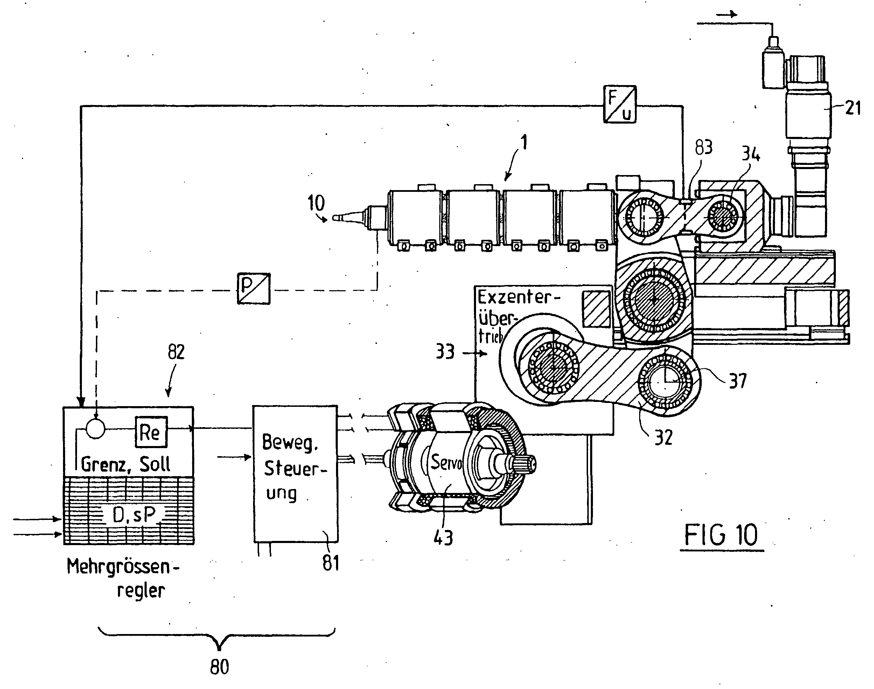

Die Figur 10 zeigt ein Einspritzaggregat mit den wichtigsten Komponenten der Steuerregelung 80. Die Bewegungssteuerung erfolgt wie am Beispiel eines Servomotores 43 dargestellt ist, über eine Vorortelektronik 81 als Leistungselektronik ausgebildet ist. Aus der Vorortelektronik lässt sich mit höchster Genauigkeit die Stellung des Rotores und durch die zwangsweise und möglichst spielfreie mechanische Kopplung mit der Einspritzschnecke die Wegposition der Plastifizierschnecke sensorisch ermitteln. In einem Mehrgrössenregler 82 werden aufgrund eines Kraftsensors 83 und gegebenenfalls ein Drucksensor P von der flüssigen Schmelze im Düsenbereich, die für einen Spritzzyklus erforderlichen Steuerbefehle mit einem Hochleistungsrechner in Echtzeit ermittelt (Echtzeitregelung) und dem Servomotor 43 gegeben. Leistungselektronik, Servomotor, mechanische Zwangskupplung über einen Exzenterantrieb ergeben eine maximal mögliche Beherrschung selbst von Mikrobewegungen der Einspritzschnecke.

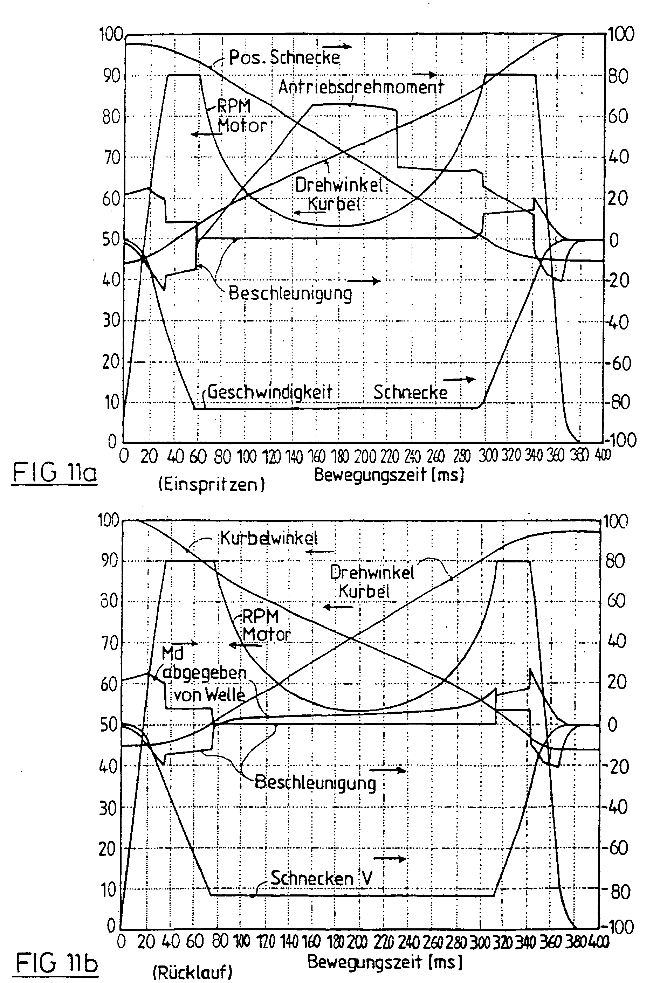

Die Figur 11a zeigt ein Beispiel für ein Simulationsbild den maximal möglichen Hubweg von Totpunkt zu Totpunkt und schliesst die Einspritzphase sowie die Nachdruckphase mit ein. Für die Zeichenerklärung wird auf die Figur 5 Bezug genommen. Die Geschwindigkeitsangaben stellen mögliche Maximalwerte dar. Interessant dazu ist die Figur 11b, welche die umgekehrte Bewegungsrichtung, nämlich das Plastifizieren darstellt. Die Plastifizierschnecke kann mit konstanter Drehzahl oder profiliert angetrieben werden. Die sich aus der Förderung ergebende Volumenvergrösserung wird mit kontrolliertem Druck über das selbe Hebelwerk möglichst ohne Lastwechsel auf die Mechanik und entsprechend kontrollierter Rücklaufbewegung durchgeführt. Übergeordnet betrachtet, erfolgt die Einspritzphase als Geschwindigkeitsregelung, der Nachdruck als Duckregelung. Der Rückzug der Schnecke erfolgt wieder über eine Geschwindigkeitsregelung. Dabei erlaubt der Mehrgrössenregler mehrere Parameter zu regeln, wobei die Parameter eine Art Hüllbegrenzungshaube bilden. Es wird jeweils nur ein Parameter aktiv geregelt, derjenige der gerade an die Hüllbegrenzungskurve "anstösst" während im entsprechenden Zeitpunkt die anderen Reglerteile inaktiv sind, weil sie momentan für regeltechnische Korrekturen nicht gefordert sind. Ganz wesentlich ist die Möglichkeit beide Bewegungsrichtungen mit Einschluss der totpunktbereiche mit der selben Regelung bzw. der selben Regelalgorithmen durchzuführen.

Die Figuren 12a und 12b zeigen das bereits beschriebene Parallelhebelwerk auf zwei verschiedenen Arten eingebaut. Allen Lösungen gemeinsam ist eine Exzenterwelle 70, von welcher gabelartig bzw. spiegelbildlich auf beiden Seiten ein Hebelwerk bis zum Lagergehäuse 34 geführt ist. Die beiden parallelen Hebelwerke sind identisch und erzeugen eine vollständige Symmetrie für den Krafteingriff von beiden Seiten auf das Lagergehäuse 34. Es ergibt sich eine ideale Kräfteeinleitung der Hebelpaare 30, dies weil auch beide Führungsschienen 52 und 56 als zwei Parallelzüge ausgebildet sind, so dass ein echter Parallelzug entsteht. Daraus resultiert die höchst mögliche Genauigkeit der Weg- und Kräfteführung zwischen der Einspritzschnecke 4 sowie dem Antriebsmotor bzw. Servomotor 43. Die Rotation der einen Abtriebswelle des Servomotores wird im Exzenterübertrieb in einen Parallelzug aufgegabelt und erst über die Lagerstelle 34 wieder axsymmetrisch zusammengeführt. Die Figur 12c zeigt eine besonders vorteilhafte Verwendung des Einspritzaggregates, bei dem das Doppelhebelpaar mit der Lagerstelle einen Stossanker bildet.

## Patentansprüche

1. Verfahren für das Spritzgiessen von Kunststoffteilen mit einer rotativ und axial angetriebenen Einspritzschnecke (4), wobei der Antrieb für die Axialbewegung mit zwischengeschaltetem Kurbeltrieb und Doppelhebelwerk erfolgt, und wobei
beidseits der Einspritzschnecke je ein Doppelhebelwerk (30, 31 / 30', 31') zwischen Kurbeltrieb (28) und Einspritzschnecke (4) angeordnet ist, wobei eine bevorzugt elektromotorisch erzeugte Kraft über das Doppelhebelwerk (30, 31 / 30', 31') zwangsgekoppelt, im wesentlichen in axialer Richtung (x) über ein Hebelpaar (30, 30') mit symmetrischem Krafteingriff in die hintere Lagerstelle (34) der Einspritzschnecke (4) eingeleitet wird.

2. Verfahren nach Anspruch 1,
**dadurch gekennzeichnet,**
**dass** der Kurbeltrieb (28) für das Anfahren der Extremlagen zwischen den beiden Totpunkten (14, 15) bzw. Totpunktnähe, bewegbar ist, und die Kraft insbesondere als Zugkraft in die hintere Lagerstelle (34) eingeleitet wird, wobei die Kurbel- bzw. Exzenterwirkung der entsprechend veränderten Übersetzung in Totpunktnähe in der Steuerung/Regelung vorzugsweise mit zusätzlichen regeltechnischen Mitteln wie etwa spezifischen Druckkennlinien, Geschwindigkeitskennlinien, giessspezifischen Kennlinien etwa aus Massepolster usw. kompensiert bzw. korrigiert wird.

3. Einspritzaggregat für Spritzgiessmaschinen, mit einer rotativ und axial angetriebenen Einspritzschnecke (4) und insbesondere gesteuertem bzw. geregeltem elektromechanischem Antrieb mittels Kurbeltrieb und Doppelhebelwerk für die Axialbewegung der Einspritzschnecke (4), wobei dieser Antrieb
zwei im Bereich der hinteren Lagerstelle (34) der Einspritzschnecke (4) zwangsgekoppelte Doppelhebelwerke (30, 31 / 30', 31') mit einem Hebelpaar (30, 30') mit einer im wesentlichen axialen und symmetrischen Krafteinwirkung in die Einspritzschneckenaxe für die Axialbewegung der Einspritzschnecke (4) aufweist.

4. Einspritzaggregat nach Anspruch 3,
**dadurch gekennzeichnet,**
**dass** der elektromechanische Antrieb einen Exzenter- oder Kurbeltrieb (28, 33) aufweist, über welchen der motorische Antrieb (20) auf die als Doppelexzenter- bzw. Doppelkurbeln ausgebildeten Doppelhebelwerke eingeleitet ist, wobei die Doppelhebelwerke ein Hebelpaar (30, 30') aufweisen, das sich parallel zur Einspritzschneckenaxe (4) erstreckt, an aufrechten Schwenkarmen (31, 31') angelenkt und über diese mit einem Antrieb verbunden sind.

5. Einspritzaggregat nach einem der Ansprüche 3 und 4,
**dadurch gekennzeichnet,**
**dass** das Hebelpaar (30, 30') mit der Lagerstelle (34) einen Zuganker bildet, wobei das Zughebelpaar zusammen mit der Achse der Einspritzschnecke (4) etwa in einer gemeinsamen Ebene liegen.

6. Einspritzaggregat nach einem der Ansprüche 3 bis 5,
**dadurch gekennzeichnet,**
**dass** der elektromechanische Antrieb einen steuer- bzw. regelbaren Antrieb, insbesondere einen Servomotor (43) aufweist, und die maximale Auslenkbewegung des Kurbel- bzw. Exzenterübertriebes dem maximalen Hub der Einspritzschnecke (4) entspricht, welcher nach Bedarf nutzbar ist.

7. Einspritzgaggregat nach einem der Ansprüche 4 bis 6,
**dadurch gekennzeichnet,**
**dass** die Schwenkarme (31, 31') mit dem Hebelpaar (30, 30') etwa einen 90° Winkel bilden, derart, dass die Schwenkbewegung der Gelenkverbindung möglichst nahe einer gemeinsamen Ebene mit der Plastifizierschnecke (4) liegt, wobei die Schwenkarme (31, 31') an einer Basisplatte (40) des Aggregates schwenkbar abgestützt, und am unteren Armteil mit dem Exzeter- bzw. Kurbeltrieb (28) gelenkig verbunden sind.

8. Einspritzaggregat nach einem der Ansprüche 3 bis 7,
**dadurch gekennzeichnet,**
**dass** der Antrieb als Servomotor (43) mit Getriebe (44) ausgebildet, fest im Unterteil des Aggregates angeordnet und bei der Aggregatverschiebung für die Düsenzu- und - weg-fahrbewegung mitbewegt wird, wobei der Exzenter- bzw. Kurbelantrieb (28) bevorzugt eine durchgehende Antriebswelle (70) aufweist, und das Hebelwerk symmetrisch auf beiden Seiten der Einspritzschnecke (4) ausgebildet ist.

9. Einspritzaggregat nach Anspruch 3,
**dadurch gekennzeichnet,**
**dass** das Einspritzaggregat als Kompaktbaugruppe ausgebildet ist, mit einer Basisplatte (40) als komplette Baueinheit integral mit einem elektromechanischen Exzenter- bzw. Kurbelantrieb (28) für die Einspritzschnecke (4) schlittenartig hin- und herverschiebbar ist, und die Einspritzschnecke (4) über ihre hintere Lagerstelle (34) mit einem Hebelpaar (30, 30') relativ und parallel zur Basisplatte (40) in der Art eines Schlittens für die Axialbewegung der Einspritzschnecke (4) bewegbar ist.

10. Einspritzaggregat nach Anspruch 3,
**dadurch gekennzeichnet,**
**dass** es vorort Steuer-Regelmittel aufweist, zur Koordinierung aller Bewegungsfunktionen und des Druckverlaufes der Spritzmasse, insbesondere für den Arbeitsbereich der Einspritzschnecke bei der Hubbewegung für das Einspritzen und die Rücklaufbewegung beim Plastifizieren.

## Claims

1. Method for injection moulding plastic parts comprising a rotatory and axially driven injection screw (4), wherein the drive for axial movement takes place with an interpositioned crank drive and articulated lever gear, and wherein a respective articulated lever gear (30, 31/30', 31') is arranged between the crank drive (28) and injection screw (4) on either side of the injection screw, wherein a preferably electromotively generated force positively coupled via the articulated lever gear (30, 31/30', 31') is introduced into the rear bearing (34) of the injection screw (4) substantially in the axial direction (x) via a pair of levers (30, 30') with symmetrical application of force.

2. Method according to claim 1, **characterised in that** the crank drive (28) can be moved between the two dead centres (14, 15) or dead centre vicinity to approach the end positions and the force is introduced, in particular as a tensile force, into the rear bearing (34), the crank effect or eccentric effect of the correspondingly changed transfer in the dead centre vicinity is compensated or corrected in the open-loop/closed-loop control, preferably with additional control means such as specific characteristic pressure curves, characteristic speed curves, characteristic cast-specific curves made, for example, of melt cushions, etc.

3. Injection unit for injection moulding machines comprising a rotatory and axially driven injection screw (4) and, in particular, comprising an open-loop- or closed-loop-controlled electromechanical drive by means of a crank drive and articulated lever gear for the axial movement of the injection screw (4), wherein this drive comprises two articulated lever gears (30, 31/30', 31') positively coupled in the region of the rear bearing (34) of the injection screw (4), comprising a pair of levers (30, 30') with a substantially axial and symmetrical application of force into the injection screw axis for the axial movement of the injection screw (4).

4. Injection unit according to claim 3, **characterised in that** the electromechanical drive comprises an eccentric or crank drive (28, 33) via which the motor-driven drive (20) is introduced onto the articulated lever gears designed as double eccentric cranks or double cranks, the articulated lever gears comprising a pair of levers (30, 30') extending parallel to the injection screw axis (4), being articulated to upright pivot arms (31, 31') and being connected via these to a drive.

5. Injection unit according to either of claims 3 and 4, **characterised in that** the pair of levers (30, 30') forms, with the bearing (34) a tie rod, wherein the pair of traction levers, together with the axis of the injection screw (4), are located substantially in one common plane.

6. Injection unit according to any of claims 3 to 5, **characterised in that** the electromechanical drive comprises an open-loop-controllable or closed-loop-controllable drive, in particular a servomotor (43), and the maximum deflection of the crank or eccentric overdrive corresponds to the maximum stroke of the injection screw (4), which can be used as required.

7. Injection unit according to any of claims 4 to 6, **characterised in that** the pivot arms (31, 31') with the pair of levers (30, 30') substantially form a 90° angle such that the pivot movement of the articulated joint is located as close as possible to a common plane with the plasticising screw (4), the pivot arms (31, 31') being pivotally supported on a base plate (40) of the unit and being articulated at the lower arm part to the eccentric drive or crank drive (28).

8. Injection unit according to any of claims 3 to 7, **characterised in that** the drive is constructed as a servomotor (43) with a gear (44), is rigidly arranged in the lower part of the unit and is also moved when the unit is displaced for the nozzle approach and withdrawal movement, the eccentric drive or crank drive (28) preferably having a continuous drive shaft (70), and the lever gear being symmetrically constructed on both sides of the injection screw (4).

9. Injection unit according to claim 3, **characterised in that** the injection unit is constructed as a compact subassembly, can be moved back and forth in a carriage-like manner with a base plate (40) as a complete unit integral with an electromechanical eccentric drive or crank drive (28) for the injection screw (4), and the injection screw (4) can be moved relative and parallel to the base plate (40) in the manner of a carriage for axial movement of the injection screw (4), via its rear bearing (34) with a pair of levers (30, 30').

10. Injection unit according to claim 3, **characterised in that** it comprises *in situ* open-loop and closed-loop control means for coordinating all movement functions and the pressure course of the injection moulding compound, in particular for the operating range of the injection screw during the lifting movement for injection and the return movement during plasticising.

## Revendications

1. Procédé pour le moulage par injection de pièces en matière plastique au moyen d'une vis sans fin d'injection (4) entraînée en rotation et axialement, l'entraînement prévu pour le mouvement axial ayant lieu au moyen d'un mécanisme à bielle et manivelle et d'un mécanisme à levier double interposés, tandis que, sur chacun des deux côtés de la vis sans fin d'injection, un mécanisme à levier double (30, 31/30', 31') respectif est disposé entre le mécanisme à bielle et manivelle (28) et la vis sans fin d'injection (4), et une force, produite de préférence par un moteur électrique et faisant l'objet d'un couplage forcé par l'intermédiaire du mécanisme à levier double (30, 31/30', 31'), est appliquée sur le palier arrière (34) de la vis sans fin d'injection (4) essentiellement suivant la direction axiale (x) au moyen d'une paire de leviers (30, 30'), avec une introduction de force symétrique.

2. Procédé suivant la revendication 1, la **caractérisé en ce que** le mécanisme à bielle et manivelle (28) 20 est déplaçable pour l'approche des positions extrêmes entre les deux. points morts (14, 15) ou voisinages de point mort, et la force est appliquée sur le palier arrière (34) notamment sous forme de force de traction, tandis que l'action de bielle et manivelle ou d'excentrique de la transformation modifiée en conséquence est, aux voisinages de point mort, compensée ou corrigée dans la commande/régulation, de préférence à l'aide de moyens supplémentaires de la technique de régulation tels que par exemple des lignes caractéristiques de pression, lignes caractéristiques de vitesse, lignes caractéristiques spécifiques au moulage, par exemple à partir du coussin de masse, etc..

3. Dispositif d'injection pour machine de moulage par injection comportant une vis sans fin d'injection (4) entraînée en rotation et axialement et un entraînement électromécanique, faisant notamment l'objet d'une commande ou d'une régulation, au moyen d'un mécanisme à bielle et manivelle et d'un mécanisme à levier double pour le mouvement axial de la vis sans fin d'injection (4), cet entraînement comprenant deux mécanismes à levier double (30, 31/30', 31') faisant l'objet d'un couplage forcé dans la zone du palier arrière (34) de la vis sans fin d'injection (4) et comportant une paire de leviers (30, 30') avec une action de force, essentiellement axiale et symétrique, sur l'axe de vis sans fin d'injection pour le mouvement axial de la vis sans fin d'injection (4).

4. Dispositif d'injection suivant la revendication 3, **caractérisé en ce que** l'entraînement électromécanique comprend un mécanisme à excentrique ou à bielle et manivelle (28, 33) par l'intermédiaire duquel l'entraînement par moteur (20) est appliqué sur les mécanismes à levier double réalisés sous forme d'excentriques doubles ou de bielles et manivelles doubles, et les mécanismes à levier double comprenant une paire de leviers (30, 30') qui s'étendent parallèlement à l'axe de vis sans fin d'injection (4), sont articulés sur des bras basculants (31, 31'), qui se dressent, et sont reliés par l'intermédiaire de ceux-ci à un entraînement.

5. Dispositif d'injection suivant l'une des revendications 3 et 4, **caractérisé en ce que** la paire de leviers (30, 30') forme avec le palier (34) un tirant d'ancrage, la paire de leviers de traction étant situés sensiblement, en commun avec l'axe de la vis sans fin d'injection (4), dans un plan commun.

6. Dispositif d'injection suivant l'une des revendications 3 à 5, **caractérisé en ce que** l'entraînement électromécanique comprend un entraînement pouvant faire l'objet d'une commande ou d'une régulation, notamment un servomoteur (43), et le mouvement d'excursion maximale de la transmission à bielle et manivelle ou à excentrique correspond à la course maximale de la vis sans fin d'injection (4) qui est utilisable en cas de besoin.

7. Dispositif d'injection suivant l'une des revendications 4 à 6, **caractérisé en ce que** les bras basculants (31, 31') font avec la paire de leviers (30, 30') un angle d'approximativement 90°, d'une manière telle que le mouvement de basculement de la liaison articulée est situé le plus près possible d'un plan commun avec la vis sans fin de plastification (4), les bras basculants (31, 31') prenant appui d'une manière basculante sur une plaque de base (40) du dispositif et étant reliés d'une manière articulée, à l'endroit de la partie inférieure de bras, au mécanisme à excentrique ou à bielle et manivelle (28).

8. Dispositif d'injection suivant l'une des revendications 3 à 7, **caractérisé en ce que** l'entraînement est réalisé sous forme d'un servomoteur (43) comportant un réducteur (44), est disposé d'une manière fixe dans la partie inférieure du dispositif et est entraîné dans le mouvement lors du déplacement du dispositif prévu pour le mouvement de va et vient de filière, l'entraînement à excentrique ou à bielle et manivelle (28) comportant de préférence un arbre d'entraînement (70) traversant et le mécanisme à levier étant réalisé, d'une manière symétrique, sur les deux côtés de la vis sans fin d'injection (4).

9. Dispositif d'injection suivant la revendication 3, **caractérisé en ce que** le dispositif d'injection est réalisé sous forme d'un ensemble structurel resserré sur lui-même et est déplaçable dans un sens et dans l'autre à la façon d'un chariot par une plaque de base (40), sous forme d'une unité structurelle complète, d'une manière intégrale avec un entraînement à excentrique ou à bielle et manivelle (28) électromécanique prévu pour la vis sans fin d'injection (4), et la vis sans fin d'injection (4) est déplaçable par l'intermédiaire de son palier arrière (34), par une paire de leviers (30,30'), d'une manière relative et parallèle vis-à-vis de la plaque de base (40) à la façon d'un chariot, pour le mouvement axial de la vis sans fin d'injection (4).

10. Dispositif d'injection suivant la revendication 3, **caractérisé en ce qu'**il comprend localement des moyens de commande-régulation, pour la coordination de toutes les fonctions de mouvement et de l'évolution de pression de la masse d'injection, notamment pour la zone de travail de la vis sans fin d'injection lors du mouvement dans un sens et dans l'autre prévu pour l'injection et le mouvement de recul lors de la plastification.
